# EUROPEAN PATENT APPLICATION

(11) **EP 4 528 398 A2**
(43) Date of publication of application: **26.03.2025**
(21) Application number: 24194308.3
(22) Date of filing: 13.08.2024
(51) Int. Cl.: G05B 13/04, G05B 17/02, G05B 19/418

(54) **VIRTUAL PLANT OPERATOR**

(30) Priority: 19.09.2023 IN 202311062830; 16.11.2023 US 202318511453
(71) Applicant: Schneider Electric Systems USA, Inc., Foxborough, MA 02035 (US)
(72) Inventor: MISHRA, Ajay, Irvine, CA, 92620 (US); BANCHIK, Erna, Rancho Santa Margarita, CA, 92688 (US); IVANOV, Diana, Mission Viejo, CA, 92692 (US); SINHA, Bhaskar, 500019 Hyderabad (IN); KOTTANA, Venkateswara Rao, 531036 Visakhapatnam (IN); BENDLE, Suhas, 442907 Chandrapur (IN); BHATTACHARYYA, Amitabha, 500019 Hyderabad (IN); GONDHI, Dinesh, Norwood, MA, 02062 (US)
(74) Representative: Friese Goeden Patentanwälte PartGmbB

(57) **Abstract**

A virtual plant operator system for use in an industrial plant. A data aggregator monitors operating data within the industrial plant and sends the operating data as a current state of the industrial plant to an operator assistant. The operator assistant includes a digital twin of the industrial plant and an artificial intelligence engine. The digital twin of the industrial plant receives the current state and simulates plant operations based on the current state. The artificial intelligence engine has at least one machine-learned model. The machine-learned model processes the simulated plant operations based on the current state to determine a recommendation output. The recommendation output includes stabilizing actions to the plant operations in the industrial plant and/or a predicted degree of shutdown responsive to each of the stabilizing actions.

## Description

### CROSS-REFERENCE TO RELATED APPLICATIONS

This application claims priority from Indian Patent Application No. 202311062830 filed on September 19, 2023 and from United States Patent Application No. 18/511,453 filed on November 16, 2023, which claims priority from Indian Patent Application No. 202311062830 filed on September 19, 2023.

### FIELD

The present disclosure generally relates to virtual plant operator system for use in an industrial plant.

### BACKGROUND

Industrial plants often have multiple lines of operations that are inevitably prone to process upsets and plant shutdowns. The process upsets and plant shutdowns are largely due to variations in operating parameters and upsets in related process lines (i.e., upstream processes, downstream processes, parallel processes, etc.). Consequently, industrial plants may experience several hours of downtime while operators exhaust their efforts to recover the plant from the process upsets and shutdowns. Accordingly, during this downtime, industrial plants may experience a considerable loss of throughput.

Current operations for stabilizing industrial plants during process upsets and plant shutdowns are inefficient and costly. Plant operators must rely on their own knowledge and experiences as well as their colleagues, to derive a mitigating strategy for stabilizing the plant. Furthermore, when none of the operators can provide a mitigating strategy for the process upset or plant shutdown, additional time may be spent searching through engineering documents and historical plant data for the mitigating strategy. This framework for stabilizing the plant, invites variation to the process such as the variation of available operators, as well as it incurs additional downtime for the plant while information is being relayed among operators.

Therefore, there is a need for an improved framework that can be used to identify process upsets and shutdowns within an industrial plant and efficiently provide mitigating strategies to stabilize the plant.

### SUMMARY

Aspects of the present disclosure provide a virtual operator system for detecting and predicting process upsets and plant shutdowns within an industrial plant, and for determining and providing mitigating strategies for stabilizing the industrial plant during the process upsets and plant shutdowns.

In one aspect, a virtual plant operator system for use in an industrial plant comprises a data aggregator configured to monitor operating data within the industrial plant. The data aggregator sends the operating data as a current state of the industrial plant. An operator assistant receives the current state. The operator assistant comprises a digital twin of the industrial plant. The digital twin is configured to simulate plant operations in the industrial plant based on the current state. An artificial intelligence engine has at least one machine-learned model. The machine-learned model is configured to process the simulated plant operations based on the current state to determine a recommendation output. The recommendation output comprises one or more stabilizing actions to plant operations in the industrial plant and a predicted degree of shutdown responsive to each of the stabilizing actions.

In another aspect, a virtual plant operator system for use in an industrial plant comprises a data aggregator configured to monitor operating data within the industrial plant. The operating data includes at least one of extrapolated operating data from an extrapolated scenario, operator actions performed in the industrial plant, and trip data. The data aggregator sends the operating data from a future destabilized scenario based on the extrapolated operating data as a current state. An operator assistant receives the current state. The operator assistant comprises a digital twin of the industrial plant. The digital twin is configured to simulate plant operations in the industrial plant based on the current state. An artificial intelligence engine has at least one machine-learned model. The machine-learned model is configured to process the simulated plant operations based on the current state to determine a recommendation output. The recommendation output comprises one or more stabilizing actions to the plant operations in the industrial plant in the future destabilized scenario and a predicted degree of shutdown for each of the stabilizing actions.

In yet another aspect, a method of operating an industrial plant comprises monitoring operating data within the industrial plant. A current state based on the operating data is sent to an operator assistant of a virtual plant operator system. The operator assistant identifies a destabilized scenario within the industrial plant. A digital twin of the operator assistant is updated based on the current state to simulate plant operations in the industrial plant based thereon. An artificial intelligence engine of the operator assistant processes the current state. Processing comprises evaluating an initial degree of shutdown based on standard operating conditions criteria to analyze an initial state of the digital twin. At least one of a stabilizing action and a disrupting action is executed to modify one or more operating variables within the digital twin. A subsequent degree of shutdown is evaluated based on the standard operating conditions criteria to analyze a post-action state of the digital twin. The subsequent degree of shutdown is compared to the initial degree of shutdown to determine a change in degree of shutdown within the digital twin. A composite action reward is obtained based on at least the change of degree of shutdown within the digital twin. The composite action reward is configured to reward the machine-learned model for reducing the subsequent degree of shutdown relative to the initial degree of shutdown. One or more stabilizing actions based on the composite action reward are recommended to perform in the industrial plant. A predicted degree of shutdown is provided for each stabilizing action.

Other objects and features will be in part apparent and in part pointed out hereinafter.

### BRIEF DESCRIPTION OF THE DRAWINGS

FIG. 1 is a block diagram illustrating an example of current operations within an industrial plant.
FIG. 2 is a block diagram illustrating a virtual plant operator system according to an embodiment.
FIG. 3 is a block diagram illustrating further aspects of the virtual plant operator system of FIG. 2.
FIG. 4 is a flow diagram illustrating an example data flow architecture of the virtual plant operator system of FIG. 2.
FIG. 5 is a flow diagram illustrating a training architecture used for training an artificial intelligence engine used in the virtual plant operator system of FIG. 2 according to an embodiment.

Corresponding reference characters indicate corresponding parts throughout the drawings.

### DETAILED DESCRIPTION

The present disclosure provides a virtual plant operator system for use in an industrial plant. The virtual plant operator system of the present disclosure, provides an autonomous solution that monitors operating data within the industrial plant to detect process upsets and plant shutdowns. Moreover, the virtual plant operator system provides an autonomous solution for determining and implementing mitigating strategies to stabilize the industrial plant in a safe and efficient manner as explained in further detail below.

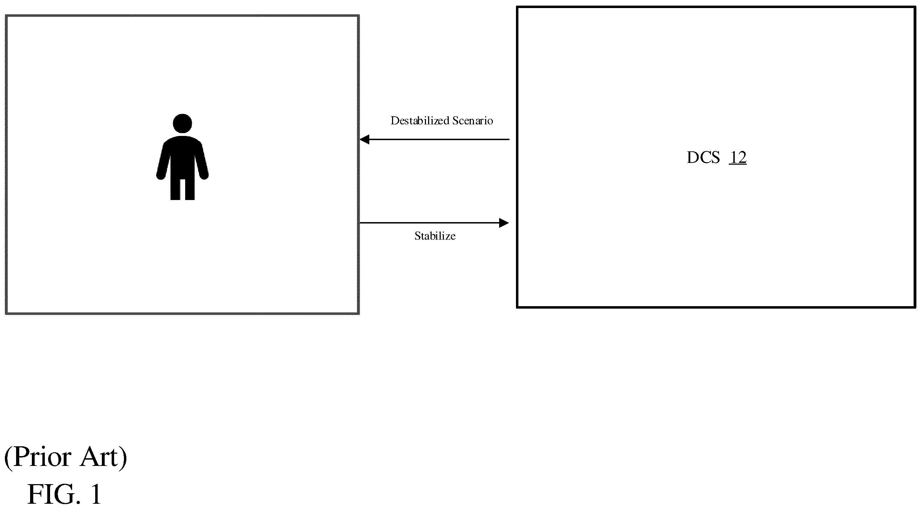

The inventors have recognized that current operations for stabilizing industrial plants during process upsets and plant shutdowns are costly and result in excess downtime for the industrial plant. Referring to FIG. 1, current operations for stabilizing an industrial plant are shown. In the illustrated embodiment, a plant operator identifies a destabilized scenario within the industrial plant through a control system of the industrial plant such as a distributed control system 12 (hereinafter referred to as "DCS") and relies upon their own knowledge and experience as well as their colleagues to derive a mitigating strategy to stabilize the scenario. This stabilizing process may take hours to a few days to achieve a stabilized plant, depending on a wide range of variable factors such as which operators are available and each operator's experience at the plant.

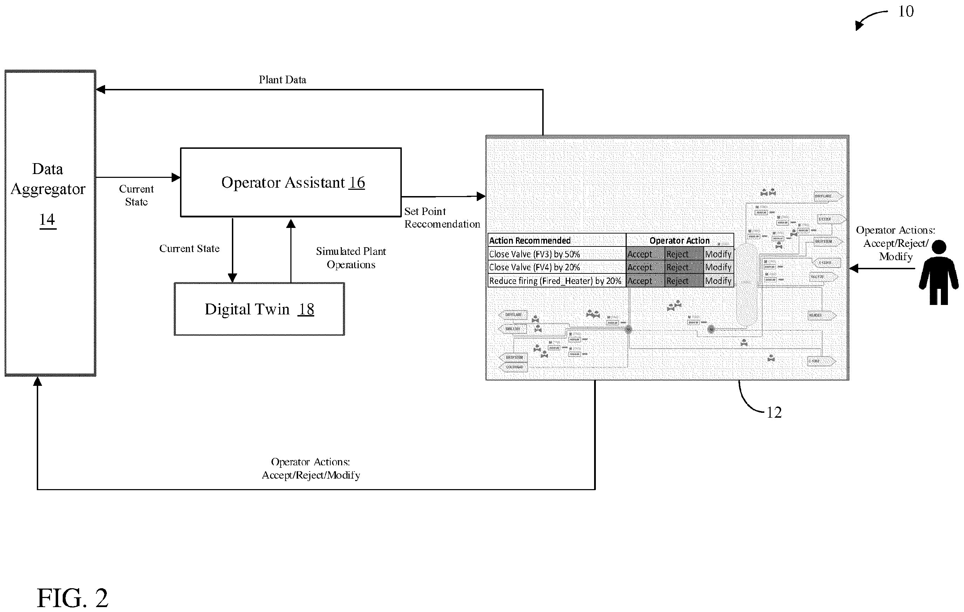

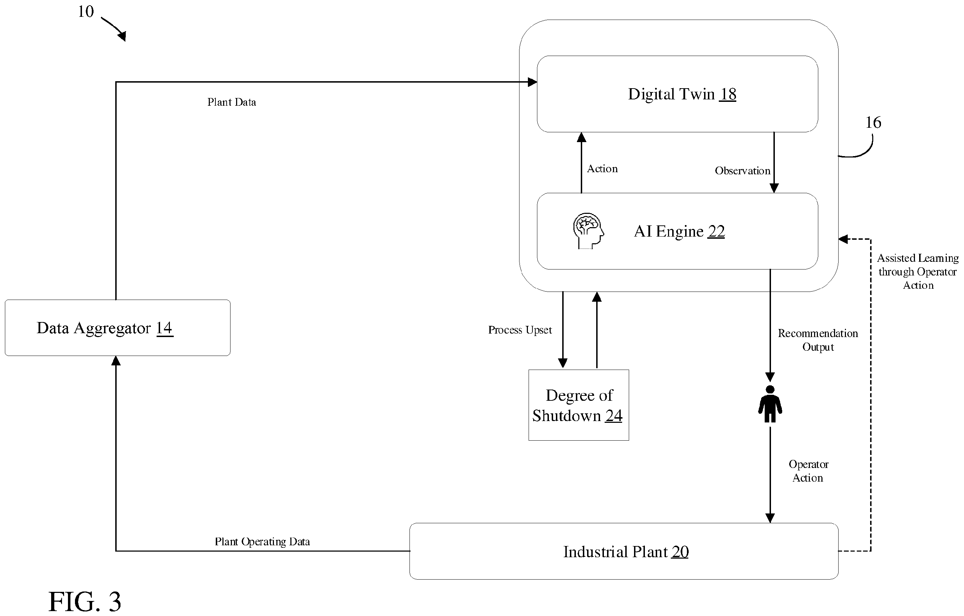

Referring now to FIG. 2, an exemplary embodiment of a virtual plant operator system in accordance with the present disclosure is generally indicated at reference number 10. The virtual plant operator system 10 comprises a data aggregator 14 that is configured to monitor operating data within an industrial plant 20 as shown in FIG. 3. Suitably, the data aggregator 14 is configured to send the operating data to an operator assistant 16 as a current state of the industrial plant 20. The operator assistant 16 comprises a digital twin 18 of the industrial plant 20 and an artificial intelligence engine 22 (hereinafter referred to as "AI engine"). The digital twin 18 is configured to simulate plant operations in the industrial plant based on the current state. The AI engine 22 uses a machine-learned model to process the simulated plant operations based on the current state to determine a recommendation output comprising one or more stabilizing actions to the plant operations and a predicted degree of shutdown responsive to each of the stabilizing actions. The operator assistant 16 provides the recommendation output to a plant operator. The recommendation output is used to determine and implement a mitigating strategy for stabilizing the industrial plant 20.

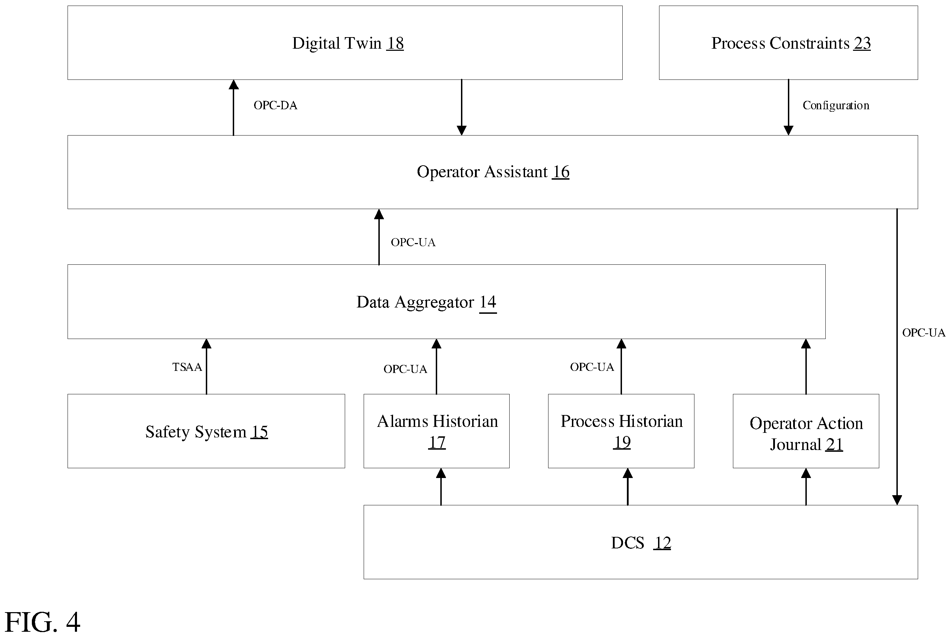

FIG. 4 shows an exemplary embodiment of a data flow architecture of the virtual plant operator system 10. In the illustrated embodiment, a DCS 12 is deployed within the industrial plant 20 and configured to monitor operating data and processes within the industrial plant, however it will be apparent to a person skilled in the art that other control systems such as programmable logic controllers, programmable automation controllers, remote terminal units, etc., may be used without departing from the scope of the invention. The plant operating data referred to in the present disclosure comprises at least one of operator actions performed in the industrial plant 20, process data, trip data, process hazard risk analysis data, alarms data, historian data, and process constraint data. However, it will be apparent to a person skilled in the art that additional data associated with the industrial plant may be considered as plant operating data. The operator actions referred to in the present disclosure, include one or more actions performed by one or more plant operators in response to stabilized and destabilized scenarios in the industrial plant 20. Additionally, in an exemplary embodiment, a safety data control system is configured to acquire safety data from the industrial plant 20.

The safety data is processed with a safety system 15 such as TRICONEX Safety Instrumented System (SIS), available from Schneider Electric. Each type of plant operating data is processed using a respective operating data device such as an alarms historian 17, process historian 19 and operator action journal logs 21. The data aggregator 14 is configured to monitor the safety data as well as the plant operating data through a data exchange standard protocol such as Open Platform Communications Unified Architecture (hereinafter referred to as "OPC-UA") or Triconex System Access Application (hereinafter referred to as "TSAA"). Further, the data aggregator 14 is configured to send plant operating and safety data as a current state to the operator assistant 16 using a standard communication protocol such as OPC-UA.

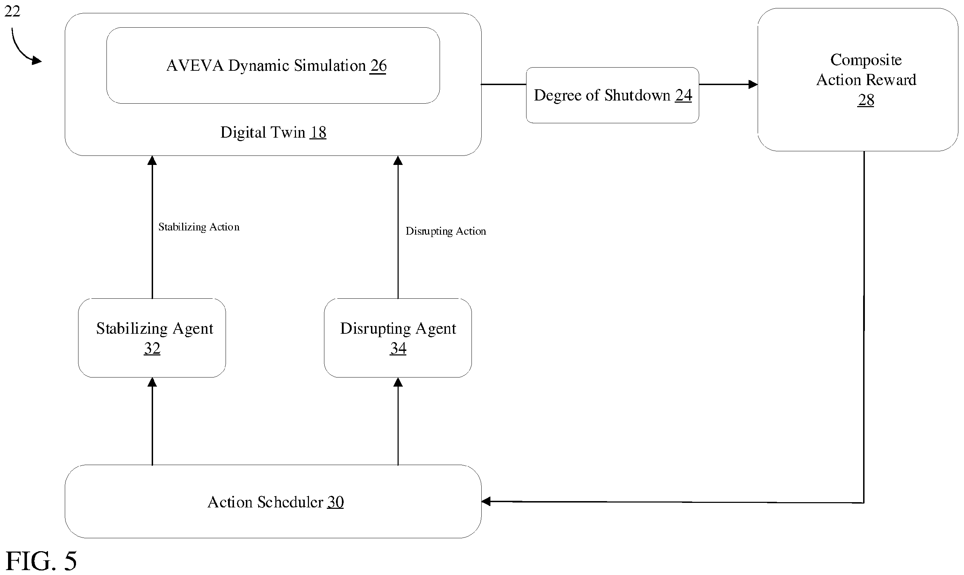

The operator assistant 16 is configured to process the current state via digital twin 18 and AI engine 22 based on determined process constraints 23. In the illustrated embodiment the digital twin 18 acts as a data sink that receives the operating input using Open Platform Communication Data Access (hereinafter referred to as "OPC DA"). The digital twin 18 of the operator assistant 16 is configured to process the current state by simulating plant operations in the industrial plant 20 based on the current state. FIG. 5 shows an exemplary embodiment wherein the digital twin 18 comprises AVEVA Dynamic Simulation 26 for dynamic process simulation of the industrial plant 20. The digital twin 18 provides a virtual environment of the industrial plant 20 for the AI engine 22 to use in determining the recommendation output as explained in further detail below.

Still referring to FIG. 5, the AI engine 22 comprises at least one machine-learned model configured to process the simulated plant operations based on the current state. The machine-learned model utilizes a degree of shutdown metric 24 to assess the probability of a process upset or plant shutdown occurring based on operating variable values and a standard operating conditions criteria. The standard operating conditions criteria defines regions of operating conditions within the industrial plant 20 (i.e., safe region, moderate danger region, high danger region, etc.,). The machine-learned model is configured to evaluate an initial degree of shutdown 24 based on the standard operating conditions criteria to analyze an initial state of the digital twin 18. Further, the machine-learned model comprises an action scheduler 30 configured to schedule either a stabilizing agent 32 or disrupting agent 34 to execute at least one of a stabilizing action and a disrupting action to modify one or more operating variables within the digital twin 18. In one suitable embodiment, the action scheduler 30 is further configured to determine a time frame which can be modified as a hyper-parameter based on training requirements to schedule the respective agent to act within. The stabilizing action is an action that is performed such that the degree of shutdown is reduced from the initial state to a post-action state, and is based on at least one of operating actions, engineering documents and historical plant data. The disrupting action is an action performed such that the degree of shutdown is increased from the initial state to the post-action state and is based on past plant disturbance data.

The machine-learned model is configured to evaluate a subsequent degree of shutdown 24 based on the standard operating conditions criteria to analyze the post-action state of the digital twin 18. From here, the machine-learned model is configured to compare the subsequent degree of shutdown to the initial degree of shutdown to determine a change in degree of shutdown within the digital twin 18. The machine-learned model is configured to obtain a composite action reward 28 based on at least the change of degree of shutdown within the digital twin 18. The composite action reward 18 is configured to reward the machine-learned model for reducing the subsequent degree of shutdown relative to the initial degree of shutdown and conversely penalize the machine-learned model for increasing the subsequent degree of shutdown relative to the initial degree of shutdown. Moreover, the AI engine 22 is configured to generate the recommendation output comprising one or more stabilizing actions to the plant operations in the industrial plant and a predicted degree of shutdown responsive to each of the stabilizing actions based on the composite action reward 28 that optimizes the degree of shutdown, plant performance and safety in the industrial plant 20.

The recommendation output is configured to provide a mitigating strategy for stabilizing the industrial plant 20. Each one of the one or more stabilizing actions of the recommendation output defines an operating procedure to perform in the industrial plant 20 to stabilize the plant. Further the predicted degree of shutdown estimates the affect the stabilizing actions will have on the industrial plant 20. In one embodiment, the recommendation output further comprises a cause of a destabilized scenario detected by the operator assistant 16. The operator assistant 16 is configured to provide the recommendation output to a plant operator via a display of the DCS 12 using OPCUA protocol. Additionally, in one embodiment the operator assistant 16 is configured to provide a feedback request to the plant operator via the display, to allow the plant operator to accept, reject, or modify the one or more stabilizing actions of the recommendation output, as shown in FIG. 2. In this case, the feedback request is used to re-train the virtual plant operator system 10. For example, the machine-learned model is re-trained to only execute stabilizing actions within the digital twin 18 that have been accepted or modified by the plant operator via the feedback request.

In an exemplary embodiment, the virtual plant operator system 10 further comprises a controller that is configured to automatically perform one or more stabilizing actions of the recommendation output in the industrial plant 20. For example, the controller is configured to utilize a traditional fieldbus approach to communicate the recommendation output to a smart automation component to perform within the industrial plant 20. In another embodiment, the controller is configured to designate only the stabilizing actions that are accepted by the plant operator via the feedback request to the smart automation component to perform in the industrial plant 20. Similarly, in one embodiment the controller is configured to designate the smart automation component to perform at least one of the modified stabilizing actions modified by the plant operator through the feedback request in the industrial plant 20.

The virtual operator system 10 as explained above is configured to be used in the industrial plant 20 to identify live destabilized scenarios from live operating data and provide mitigating strategies to stabilize the live destabilized scenarios. An alternative embodiment of the virtual operator system 10, wherein the virtual operator system is used to forecast future destabilized scenarios of the industrial plant 20 and to determine mitigating strategies for the future destabilized scenarios, is further described below.

In an exemplary embodiment, an extrapolated scenario of the industrial plant 20 is created comprising extrapolated operating data. In one embodiment, the extrapolated operating data is created within the operator assistant 16 for training purposes and for detecting other plausible scenarios. The operator assistant 16 is configured to process the current state from the extrapolated operating data with the digital twin 18 and AI engine 22. The AI engine 22 is configured to determine a recommendation output comprising one or more stabilizing actions to plant operations in the industrial plant 20 in a future destabilized scenario of the industrial plant 20. Further, the recommendation output provides a predicted degree of shutdown for each of the stabilizing actions. Similar to above, in one suitable embodiment the recommendation output comprises a cause of the future destabilized scenario detected by the operator assistant 16. The operator assistant 16 is further configured to provide the recommendation output from the extrapolated operating data to a plant operator via the display. Additionally, in one embodiment the operator assistant 16 is configured to provide a feedback request to the plant operator via the display to allow the plant operator to accept, reject, or modify the one or more stabilizing actions of the recommendation output. For preventative maintenance, the virtual plant operator system 10 is configured to automatically perform at least one of the accepted or modified stabilizing actions of within the industrial plant 20.

The virtual plant operator system 10, as discussed above, is configured for operating industrial plant 20 to identify process upsets and plant shutdowns and further to provide mitigating strategies for stabilizing plant conditions in a safe and efficient manner. A method of using the virtual operator system 10 to operate the industrial plant 20 is further described below.

Initially, the virtual operator system 10 monitors plant operating and safety data within the industrial plant 20. The operator assistant 16 of the virtual operator system identifies a destabilized scenario within the industrial plant 20 based on the plant operating data. The data aggregator 14 sends plant operating data as a current state to the operator assistant 16 of the virtual operator system 10. The operator assistant 16 updates the digital twin 18 based on the current state to simulate plant operations in the industrial plant 20. The operator assistant 16 processes the current state within the AI engine 22.

The AI engine 22 processes the current state with the machine-learned model, wherein the machine-learned model first evaluates the initial degree of shutdown based on standard operating conditions criteria to analyze the initial state of the digital twin 18. Next, action scheduler 30 schedules either the stabilizing agent 32 or disrupting agent 34 to execute at least one of the stabilizing action and the disrupting action to modify one or more operating variables within the digital twin 18. The machine-learned model evaluates the subsequent degree of shutdown based on the standard operating conditions criteria to analyze the post-action state of the digital twin 18. The subsequent degree of shutdown is then compared to the initial degree of shutdown to determine a change in degree of shutdown within the digital twin 18. The machine-learned model obtains a composite action reward based on at least the change of degree of shutdown within the digital twin. The machine-learned model repeatedly processes the current state to obtain an optimal composite action reward with an optimized degree of shutdown.

Once the machine-learned model obtains the optimal composite action reward, the operator assistant 16 recommends the one or more stabilizing actions performed in the digital twin 18 to obtain the optimal composite action reward, via the recommendation output to a plant operator, to perform in the industrial plant 20. Furthermore, the operator assistant 16 provides the predicted degree of shutdown for each of the one or more stabilizing actions. Additionally, in one embodiment the operator assistant 16 provides a detected cause of the destabilized scenario and a feedback request to the plant operator to allow the plant operator to accept, reject or modify the one or more stabilizing actions recommended by the operator assistant 16. In one suitable embodiment, the virtual plant operator system 10 automatically performs at least one of the stabilizing actions of the recommendation output, accepted stabilizing actions from the feedback request, and modified stabilizing actions from the feedback request within the industrial plant 20 to stabilize the plant.

In an alternative embodiment, the virtual plant operator system 10, as discussed above, is configured for operating industrial plant 20 to forecast future destabilized scenarios of the industrial plant 20 and to determine mitigating strategies for the future destabilized scenarios. In an exemplary embodiment, the method of using the virtual operator system 10 to operate the industrial plant 20 incorporates steps for using the virtual operator system 10 to forecast future destabilized scenarios as further described below.

The method further comprises sending extrapolated operating data from an extrapolated scenario of the industrial plant 20 to the virtual plant operator system 10. The virtual operator system 10 processes the extrapolated operating data similarly to the live operating data. The operator assistant 16 creates the extrapolated operating data and identifies a future destabilized scenario within the industrial plant 20 based on the extrapolated operating data based on the current state received from the data aggregator 14. Accordingly, operator assistant 16 processes the current state from the extrapolated operating data with the digital twin 18 and AI engine 22. The AI engine 22 determines the recommendation output comprising one or more stabilizing actions to plant operations in the industrial plant 20 in the future destabilized scenario and provides a predicted degree of shutdown for each of the stabilizing actions.

Advantageously, the virtual plant operator system 10 and method enable autonomous operation of the industrial plant 20. The virtual plant operator system 10 captures operator actions including actions in response to process upsets and shutdowns during operation of the industrial plant 20, and analyzes the operator actions in conjunction with other relevant data and information associated with operation of the industrial plant to identify and predict process upsets. The operator assistant 16 is used to identify and provide the recommendation output for determining mitigating strategies for addressing (e.g., stabilizing or correcting) the process upsets and plant shutdowns. The mitigating strategies provide an impact analysis of operator actions for addressing the process upsets and at least one of set point recommendations with plausible steady states, predicted incident information, updating process variables and operating procedures for the plant operators.

The virtual operator system 10 as described above provides an autonomous solution for operating an entire industrial plant. This is achieved as the virtual operator system 10 is configured to operate in conjunction with a control system of an entire plant. However, an advantage of the virtual plant operator system 10 is that it is modular and may additionally be used on a smaller scale such as with individual control systems for individual components of the plant such as equipment or sub processes.

Embodiments of the present disclosure comprise a special purpose computer including a variety of computer hardware, as described in greater detail herein and are operational with other special purpose computing system environments or configurations even if described in connection with an example computing system environment. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the present disclosure include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices. For purposes of illustration, programs and other executable program components may be shown as discrete blocks. It is recognized, however, that such programs and components reside at various times in different storage components of a computing device, and are executed by a data processor(s) of the device.

In operation, processors, computers, and/or servers may execute the processor-executable instructions (e.g., software, firmware, and/or hardware) such as those illustrated herein to implement aspects of the invention. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the present disclosure.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

Having described the invention in detail, it will be apparent that modifications and variations are possible without departing from the scope of the invention defined in the appended claims.

When introducing elements of the present invention or the preferred embodiments(s) thereof, the articles "a", "an", "the" and "said" are intended to mean that there are one or more of the elements. The terms "comprising", "including" and "having" are intended to be inclusive and mean that there may be additional elements other than the listed elements.

In view of the above, it will be seen that the several objects of the invention are achieved and other advantageous results attained.

As various changes could be made in the above products without departing from the scope of the invention, it is intended that all matter contained in the above description and shown in the accompanying drawings shall be interpreted as illustrative and not in a limiting sense.

Accordingly, the present invention may also be described as a virtual plant operator and/or as a virtual plant operator system for use in an industrial plant and/or as follows, optionally in combination with one or more of the above-mentioned features of the present invention: A data aggregator monitors operating data within the industrial plant and sends the operating data as a current state of the industrial plant to an operator assistant. The operator assistant includes a digital twin of the industrial plant and an artificial intelligence engine. The digital twin of the industrial plant receives the current state and simulates plant operations based on the current state. The artificial intelligence engine has at least one machine-learned model. The machine-learned model processes the simulated plant operations based on the current state to determine a recommendation output. The recommendation output includes stabilizing actions to the plant operations in the industrial plant and/or a predicted degree of shutdown responsive to each of the stabilizing actions.

## Claims

1. Virtual plant operator system for use in an industrial plant, the plant operator system comprising:
a data aggregator configured to monitor operating data within the industrial plant, the data aggregator being configured to send the operating data as a current state of the industrial plant; and
an operator assistant configured to receive the current state, the operator assistant comprising:
a digital twin of the industrial plant configured to simulate plant operations in the industrial plant based on the current state,
an artificial intelligence engine having at least one machine-learned model, the machine-learned model configured to process the simulated plant operations based on the current state to determine a recommendation output, wherein the recommendation output comprises one or more stabilizing actions to plant operations in the industrial plant and a predicted degree of shutdown responsive to each of the stabilizing actions.

2. Plant operator system as set forth in claim 1, wherein the machine-learned model is configured to evaluate an initial degree of shutdown based on a standard operating conditions criteria to analyze an initial state of the digital twin , execute at least one of a stabilizing action and a disrupting action to modify one or more operating variables within the digital twin, evaluate a subsequent degree of shutdown based on the standard operating conditions criteria to analyze a post-action state of the digital twin, compare the subsequent degree of shutdown to the initial degree of shutdown to determine a change in degree of shutdown within the digital twin, obtain a composite action reward based on at least the change of degree of shutdown within the digital twin, and generate the recommendation output based on the composite action reward.

3. Plant operator system as set forth in claims 1 or 2, wherein the operator assistant is further configured to provide a feedback request to a plant operator, wherein the feedback request is configured to allow the plant operator to accept, reject, or modify the one or more stabilizing actions and wherein the operator assistant is re-trained based on the feedback request.

4. Plant operator system as set forth in claim 3, further comprising a controller configured to automatically perform at least one of the stabilizing actions accepted by the plant operator in the industrial plant, and wherein the controller is further configured to automatically perform at least one of the modified stabilizing actions modified by the plant operator in the industrial plant.

5. Plant operator system as set forth in any of claims 1-4, wherein the operator assistant is further configured to detect a cause of a destabilized scenario based on the current state.

6. Plant operator system as set forth in any of claims 1-5, wherein each of the one or more stabilizing actions defines an operating procedure to perform in the industrial plant.

7. Plant operator system as set forth in any of claims 1-6, wherein the operating data comprises at least one of operator actions performed in the industrial plant, trip data, process hazard risk analysis data, alarms data, historian data, and process constraint data, and wherein the operator actions comprise actions performed by one or more plant operators in response to a destabilized scenario in the industrial plant.

8. Plant operator system as set forth in claim 7, wherein the destabilized scenario comprises a process upset or a shutdown within the industrial plant.

9. Virtual plant operator system for use in an industrial plant, the plant operator system comprising:
a data aggregator configured to monitor operating data within the industrial plant, the operating data including at least one of extrapolated operating data from an extrapolated scenario, operator actions performed in the industrial plant, and trip data, the data aggregator is configured to send the operating data from a future destabilized scenario based on the extrapolated operating data as a current state;
an operator assistant configured to receive the current state, the operator assistant comprising:
a digital twin of the industrial plant configured to simulate plant operations in the industrial plant based on the current state,
an artificial intelligence engine having at least one machine-learned model, the machine-learned model configured to process the simulated plant operations based on the current state to determine a recommendation output, wherein the recommendation output comprises one or more stabilizing actions to plant operations in the industrial plant in the future destabilized scenario and a predicted degree of shutdown for each of the stabilizing actions.

10. Plant operator system as set forth in claim 9, wherein the operator assistant is configured to detect a cause of the future destabilized scenario based on the current state and provide the cause to a plant operator.

11. Plant operator system as set forth in claims 9 or 10, further comprising at least one controller and wherein the operator assistant is configured to forecast the destabilized future scenario within the industrial plant and perform a preventative action via the controller to prevent the destabilized future scenario from occurring within the industrial plant.

12. Method of operating an industrial plant, the method comprising:
monitoring operating data within the industrial plant;
sending a current state based on the operating data to an operator assistant of a virtual plant operator system;
identifying a destabilized scenario within the industrial plant via the operator assistant;
updating a digital twin of the operator assistant based on the current state to simulate plant operations in the industrial plant based thereon;
processing the current state within an artificial intelligence engine of the operator assistant, wherein processing comprises:
evaluating an initial degree of shutdown based on standard operating conditions criteria to analyze an initial state of the digital twin;
executing at least one of a stabilizing action and a disrupting action to modify one or more operating variables within the digital twin;
evaluating a subsequent degree of shutdown based on the standard operating conditions criteria to analyze a post-action state of the digital twin;
comparing the subsequent degree of shutdown to the initial degree of shutdown to determine a change in degree of shutdown within the digital twin; and
obtaining a composite action reward based on at least the change of degree of shutdown within the digital twin, the composite action reward configured to reward the machine-learned model for reducing the subsequent degree of shutdown relative to the initial degree of shutdown;
recommending one or more stabilizing actions based on the composite action reward to perform in the industrial plant; and
providing a predicted degree of shutdown for each stabilizing action.

13. Method as set forth in claim 12, further comprising detecting a cause of the destabilized scenario via the operator assistant and providing the cause to a plant operator.

14. Method as set forth in claims 12 or 13, further comprising providing a feedback request to a plant operator, wherein the feedback request is configured to allow the plant operator to accept, reject or modify the one or more stabilizing actions recommended by the operator assistant.

15. Method as set forth in any one of claims 12-14, further comprising sending extrapolated operating data based on an extrapolated scenario of the industrial plant to the virtual plant operator system to predict one or more stabilizing actions to perform in the industrial plant in the extrapolated scenario, and further comprising capturing an operator action performed in response to a destabilized scenario within the industrial plant, and automatically performing the stabilizing action within the industrial plant via a controller of the virtual plant operator system.
